# EUROPEAN PATENT SPECIFICATION

(11) **EP 4 577 742 B1**
(45) Date of publication and mention of the grant of the patent: **19.08.2026**
(21) Application number: 23787149.6
(22) Date of filing: 18.10.2023
(51) Int. Cl.: F03D 80/00

(54) **PRESTRESSING DEVICE, AND A RELATED ARRANGEMENT, WIND TURBINE, AND METHOD**
VORSPANNVORRICHTUNG UND ZUGEHÖRIGE ANORDNUNG, WINDTURBINE UND VERFAHREN
DISPOSITIF DE PRÉCONTRAINTE, ET AGENCEMENT ASSOCIÉ, ÉOLIENNE ET PROCÉDÉ

(30) Priority: 18.10.2022 EP 22202100
(43) Date of publication of application: 02.07.2025
(73) Proprietor: Siemens Gamesa Renewable Energy A/S, 7330 Brande (DK)
(72) Inventor: KONDOJU, Naresh Kumar, 7430 Ikast (DK); MORTENSEN, Kenneth Oestergaard, 7100 Vejle (DK); QUINN, Thomas F., Oviedo, FL 32765 (US)
(74) Representative: SGRE-Association
(86) International application number: PCT/EP2023/078945
(87) International publication number: WO 2024/083891

(56) References cited:
- EP-A2- 0 533 566
- WO-A1-86/00118
- DE-A1- 102018 118 779

## Description

### FIELD OF THE INVENTION

The invention concerns a prestressing device designed to be inserted into a hole in a component to suppress an ovalization of the hole when the component is loaded. Additionally, the invention concerns an arrangement, a wind turbine, a method for providing electrical energy, a method for closing a hole in a component and a method for servicing a device.

During the construction and/or during servicing of a device it can be necessary to use holes in a component to access certain parts of the device and/or to handle the component and/or attached further components. Holes for these purposes can already be present in a component or they can be drilled for that purpose. Such holes can, e.g., be plain holes or threaded holes.

A drawback of having holes in a component is that the structure of the component could be negatively affected.

Up to now these issues were handled by having a structure of the component being able to sufficiently receive respective loads, for example by providing additional stiffening structures.

From EP 0 533 566 A2 there is known a pane equipped with a fixing element comprising an annular body of a material capable of bearing against the wall faces of a hole previously formed or drilled through the pane.

The invention is therefore based on the problem of providing an improved approach. The invention is set out in the appended set of claims.

The problem is solved by a prestressing device designed to be inserted into a hole in a component, in particular a load sharing component of a wind turbine, to suppress, reduce and/or mitigated an ovalization of the hole when the component is loaded. The prestressing device comprises a sleeve and a tensioning mechanism. The prestressing device is designed to be inserted into the hole along an insertion axis. The insertion axis is defined by the hole within the component and/or by a longitudinal direction of the prestressing device. The longitudinal direction further defines a radial direction.

The tensioning mechanism is designed to deform the sleeve in such a way, that the diameter of the outer surface of the sleeve in the radial direction with respect to the insertion axis and/or longitudinal direction can be increased from a first diameter to a second diameter in at least one axial section of the sleeve by actuating the tensioning mechanism. By this, the outer surface of the sleeve can exert a force in the radial direction onto the surface of the component delimiting the hole and therefore prestressing the component, when the axial section of the sleeve is arranged in the hole and the diameter of the hole prior to the actuation of the tensioning mechanism is lower than the second diameter.

The invention is based on the idea of prestressing the material of the component in the area surrounding the hole in such a way that peak loads that otherwise result in the vicinity of the hole, especially due to an ovalization of the hole, can be at least partially compensated. In particular, the concentration of tension within the component in the area of the surface of the hole can be lowered. Since the peak loads are lowered by this approach, the initially discussed need for a stronger component to compensate for the presence of the hole and/or the use of additional support and/or stiffening structures can be avoided or at least reduced. Therefore, the invention allows the use of components having holes with a lower weight, cost and installation space requirement than typically achieved in the prior art.

According to an embodiment, the term "component of a wind turbine" is to be understood in the following as a structural relevant component of the overall structure of the wind turbine, wherein the component is configured, applied, supported, and/or mounted such to further components of the wind turbine that major operational forces - caused by the operation of the wind turbine - are, at least partially, transferred via the component of the wind turbine. Hence, the component of the wind turbine is a highly loaded structural component of the wind turbine, wherein the lifetime of the structural component is majorly influenced by operational forces of the wind turbine.

According to simulations, a noticeable increase in lifetime of components due to the use of the prestressing device according to the present invention is expected. In an exemplary simulation, rather high peak forces due to the presence of a hole that would lead to a short lifetime were lowered by using by using the prestressing device according to the present invention sufficiently to allow for a lifetime of more than 20 years. This is, e.g., highly relevant in components in wind turbines or in other components that are subject to large and/or strongly varying loads.

The inventive approach of prestressing the component by using the prestressing device can in principle be used for arbitrarily shaped holes. Preferably the sleeve and tensioning mechanism are designed in such a way, that a variation of the force on the surface of the component delimiting the hole along the circumference of the hole varies by less than 20 % of the average force. The inventive approach is however especially useful for at least approximately circular holes. In this case the prestressing device can be designed to provide forces with at least approximately rotational symmetry. This allows for a relatively simple design and a low cost of the prestressing device.

According to an embodiment, the prestressing device and/or any of the elements of the prestressing device is/are not made often elastic materials such as rubber or plastic. For example, the prestressing device is not configured be usable for an assembly or fixing element for a glazing without harmful forces being exerted on said glazing at its attachment to a support or to a functional element.

The tensioning mechanism can comprise at least one inset element that is arranged at least partially in an interior space of the sleeve, wherein an outer surface of the inset element contacts an inner surface of the sleeve in a respective contact area, wherein the diameter of the inset element in the radial direction increases continuously and/or the diameter of the interior space in the radial direction decreases continuously along the axial direction in at least one respective direction from the respective contact area.

Using the described geometry, the insert element can exert a force on the inner surface of the sleeve when pushed in the axial direction, therefore deforming the sleeve to widen its diameter and therefore to exert a force on the surface of the component delimiting the hole. The insert element and the sleeve can preferably have a rotational symmetry with respect to the insertion axis. Preferably, the diameter of the interior space can decrease in a first direction and the diameter of the insert can increase in an opposite second direction. When the insert is pushed in the first direction in this case, the sleeve is deformed, and its diameter spread.

In principle it is sufficient, when either the diameter of the inset or the diameter of the interior space varies. E.g., the inset can in principle be a straight rod or the sleeve can have straight inner walls. Preferably, both the diameter of the inset and the diameter of the interior space vary. This can allow for a larger contact area between these components, leading to a lower force density when the inset is used to deform the sleeve.

At least the section of an inner surface of the sleeve and/or of the outer surface of the inset element forming the respective contact area can be formed as the shell of a truncated cone. When the areas of the inner surface of the sleeve and of the outer surface of the inset element both form a shell of a truncated cone, these surfaces can have matching slopes or in other words angles towards the insertion axis allowing for a large contact area.

The tensioning mechanism can comprise two of the inset elements arranged in the interior space of the sleeve, wherein clamping means of the tensioning mechanism are designed to push to two inset elements towards each other in the axial direction to increase the diameter of the outer surface of the sleeve when the clamping means are actuated. Preferably, the two inset elements can be pushed towards the center of the prestressing device in the axial direction and/or the center of the axial section of the sleeve designed to contact the surface of the component delimiting the hole. By using two insets, that are pushed from both directions into the interior space of the sleeve, both ends of the sleeve in the axial direction can be widened to approximately the same degree, therefore ensuring that the overall stress generated by the prestressing device is essentially completely directed in the radial direction.

The clamping means can be or comprises a screw that extends along the insertion axis through an opening of the first one of the inset elements and into or through an opening of a second one of the inset elements and that engages a thread of a counter component, especially a nut, or the second inset element.

The design of the prestressing device can be especially simple, when the prestressing device is to be used in a hole that can be accessed from both sides when installing the prestressing device. The counter component or the second inset element providing the thread that engages the screw can then be manually held and the screw can be turned for actuating the clamping means or vice versa. Preferably, the screw is tightened until a given torque threshold is reached that can, e.g., be precalculated to achieve a desired strength of the prestressing. When the screw is manually tightened this can, e.g., achieved by using a torque wrench. Alternatively, various methods for automatically tightening a screw are known form the prior art.

The prestressing device can also be designed for use cases that allow access to the hole from only one side when installing the prestressing device. A turning of the counter component or the second inset element against the sleeve can be blocked by appropriate means, e.g., by interacting ridges and notches along the interacting surfaces of the sleeve and the second inset element, that can, e.g., run at an angle, especially orthogonal, to the circumferential direction. Similar means can be used to block a relative movement of the screw or the counter component with respect to a neighboring inset element and/or the sleeve. An accessible end of the sleeve can be shaped in such a way to provide a point of action for a spanner or a similar device for blocking the rotation of the sleeve with respect to the hole. It is also possible that the friction between the different components is sufficient to block any unwanted relative rotations when tightening the screw.

In principle the head of a screw and the counter component, especially a nut, can directly be used to exert a force on the axial end face of the respective inset element. It can however be advantageous to use a respective washer between the screw head or the nut and a respective inset element to, e.g., achieve a more even distribution of the clamping forces.

The prestressing device can be embodied such that the inset element is substantially made of metal, steel, hardened steel, technical ceramic, and/or ceramic matrix composite.

The sleeve and the at least inset element can be thus formed from the same material. The material of the sleeve and/or of the inset element can especially be the same material as the material of the component. In this case the behavior of the component without the presence of the hole can be closely approximated by using the prestressing device and/or temperature changes do not noticeably change the prestressing of the component by the prestressing device. Preferably, all parts of the prestressing device can be formed from the same material.

The sleeve can be formed as a hollow cylinder with a continuous outer surface in the circumferential direction with respect to the insertion axis. It is advantageous when a sleeve without a slit or at least without a slit extending over the full axial length of the sleeve is used. Using a sleeve with a slit would lead to a reduction of the rotational symmetry of the sleeve and therefore of the distribution of the prestress and could therefore increase the risk of ovalization of the hole for some loads.

Besides the prestressing device the invention concerns an arrangement comprising a component having a hole and a prestressing device according to the present invention arranged in the hole in such a way that the outer surface of the sleeve of the prestressing device exerts a force onto the surface of the component delimiting the hole, thereby prestressing the structure. The advantages of such an arrangement were already discussed with respect to the prestressing device according to the present invention.

The invention unfolds its beneficial effect in particular if the hole is manufactured into the component in the course of a service or maintenance task for the wind turbine after an original manufacturing and assembling of the wind turbine. For example, this means, the component in which the hole is manufactured was originally provided and designed without having the hole. Thus, the component having the retroactively manufactured hole has structural characteristics which are weaker and/or worse than original structural characteristics of the component. The invention, and/or any aspect and/or embodiment of the invention provides the effect that structural characteristics of the component can be at least partially restored, even if the original structure has been negatively inflicted by manufacturing the hole in the component.

The invention also concerns a wind turbine comprising at least one arrangement according the present invention.

In a preferred embodiment the component forms a support plate for a blade bearing in a hub of a wind turbine. This use case is especially relevant since notable stress can be introduced into such a support plate when a bending moment is exerted on the blade. Since bending moments on the rotor blades typically vary strongly over the lifetime of the wind turbine, this can lead to large and strongly variable peaks of stress in the area of the hole that can be lowered using the prestressing device. At the same time certain servicing tasks for a wind turbine might require the presence or the drilling of a hole in such a support plate, e.g., for mounting at least one hydraulic jack or some other tool for lowering the respective blade.

Other components of a wind turbine, for which the use of the discussed prestressing device or the methods discussed below are potentially advantageous, are the tower, e.g. the outer wall of a steel tower, or structures in the nacelle or the hub.

According to an aspect, the invention also concerns a method for providing electrical energy to an electricity grid, comprising the steps of:
- generating electrical energy by a generator of the wind turbine according to the present invention,
- transmitting the electrical energy through a cable from an offshore location of the wind turbine to an electric receiver station, preferably positioned in an area not belonging to international waters, and
- transmitting the electrical energy from the electric receiver station into an electricity grid.

Due to the typically rather large size of offshore wind turbines and of the turbine blades used in such wind turbines, avoiding load peaks in the area of holes used for servicing can be especially relevant in these cases.

According to another aspect, the invention also concerns a method for closing a hole in a component, comprising the of steps of:
- inserting the prestressing device according to the present invention into the hole along the insertion axis of the prestressing device, and
- actuating the tensioning mechanism of the prestressing device to deform the sleeve, thereby pushing the outer surface of the sleeve against the surface of the component delimiting the hole to exert a force in the radial direction onto the surface of the component delimiting the hole, thereby prestressing the component.

The insertion axis can preferably be approximately orthogonal to the surface of the component comprising the hole. Advantages of this method for closing a hole were already discussed with reference to the prestressing device according to the present invention.

According to a further aspect, the invention also concerns a method for servicing a device, especially for servicing a wind turbine, that comprises a component, comprising the steps:
- drilling at least one hole into the component,
- inserting the prestressing device according to the present invention into the hole along the insertion axis of the prestressing device, and
- actuating the tensioning mechanism of the prestressing device to deform the sleeve, thereby pushing the outer surface of the sleeve against the surface of the component delimiting the hole to exert a force in the radial direction onto the surface of the component to limiting the hole, thereby prestressing the component.

The method can be especially used for servicing a wind turbine. The holes can especially be useful for lowering rotor blades of the wind turbine. Preferably, the hole is used for another purpose prior to the insertion of the prestressing device, e.g., to attach a tool.

The method can therefore preferably comprise the additional steps, performed prior to the insertion of the prestressing device into the hole, of
- using the hole to connect a hydraulic jack to the component,
- actuating the hydraulic jack to move the component and preferably at least one further component of the device, and
- disconnecting the hydraulic jack from the hole.

The further component can, e.g., be a rotor blade as discussed above. In this case, the component can especially be the support plate of the blade bearing.

According to an additional aspect, a method for servicing the wind turbine is disclosed, wherein the wind turbine comprises an arrangement and the prestressing device according to one of the preceding the described embodiments. For example, the method for servicing comprises steps of checking on a compressing status the prestressing device by reviewing a geometrical and/or arrangement situation of elements of the tensioning mechanism (9). By this servicing task, it can be made sure that the prestressing device is still providing necessary prestress into the component in order to functionality and lifetime as planned. In particular, the servicing method can comprise the step of reviewing a position of the screw of the tensioning mechanism.

Other objects and features of the present invention will become apparent from the following detailed description considered in conjunction with the accompanying drawings. The drawings, however, are only principle sketches designed solely for the purpose of illustration and do not limit the invention. The drawings show:
Fig. 1 an exemplary embodiment of a prestressing device according to the present invention,
Fig. 2 an exemplary embodiment of arrangement according to the present invention,
Fig. 3 an exemplary embodiment of a wind turbine according to the present invention,
Fig. 4 a detailed view of the wind turbine shown in fig. 3,
Fig. 5 a flow chart of an exemplary embodiment of the method for servicing a device according to the present invention, comprising an exemplary embodiment of the method for closing a hole in a component according to the present invention,
Fig. 6 an exemplary embodiment of the method for providing electrical energy to an electricity grid according to the present invention, and
Fig. 7 simulation results showing the influence of an exemplary embodiment of a prestressing device according to the present invention on the stress within a component.

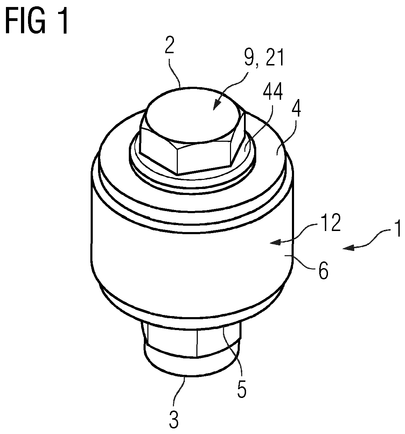

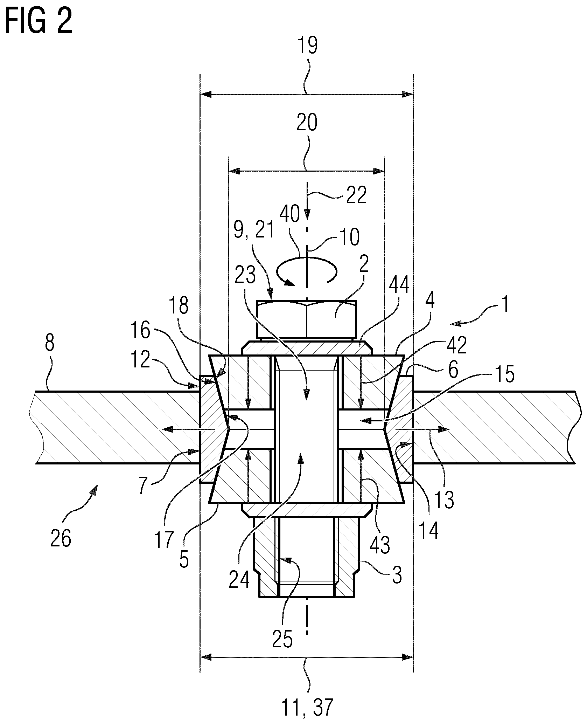

Fig. 1 shows a prestressing device 1 designed to be inserted into a hole in a component to suppress an ovalization of the hole when the component is loaded. The function of the prestressing device 1 will be discussed in conjunction with fig. 2 that shows the use of this prestressing device 1 in an arrangement 26 comprising the prestressing device 1 and the component 8.

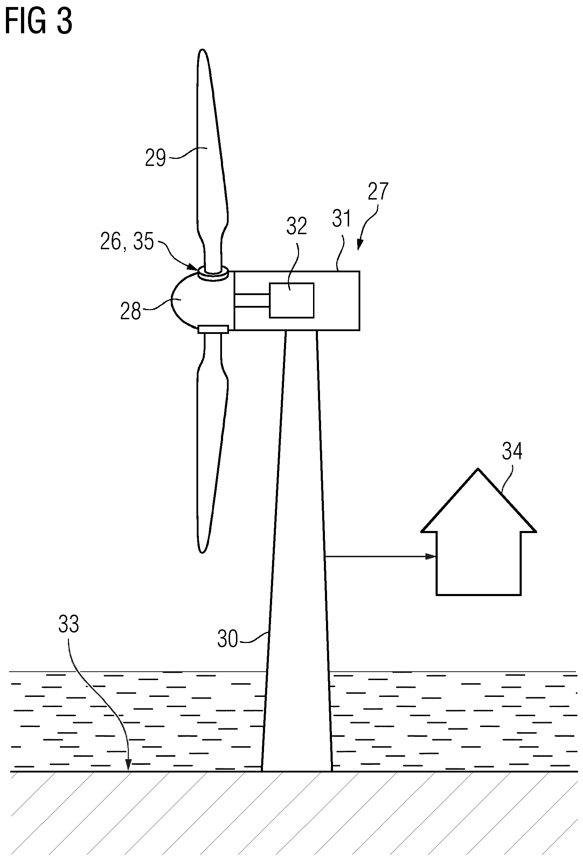

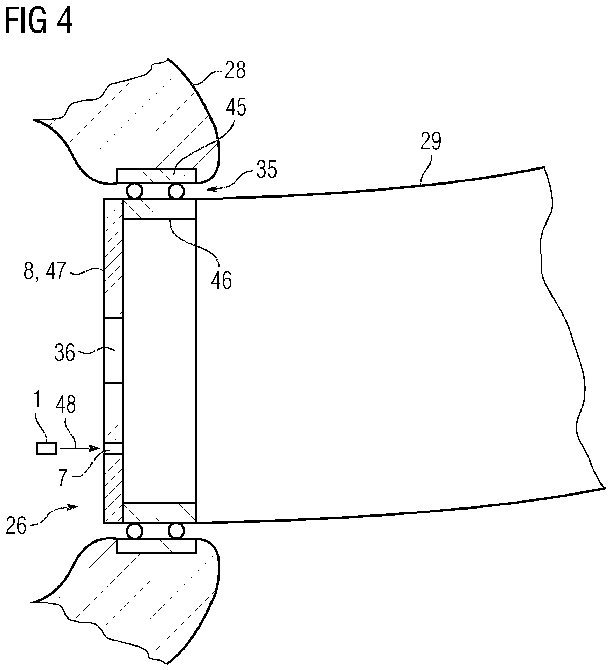

As already discussed in detail in the general part of the description, the purpose of the prestressing device 1 is to apply a force 13 to the surface 14 of the component 8 delimiting the hole 7 and therefore prestressing the component 8 to counteract the presence of peak loads in the vicinity of the hole when the component 8 is loaded. A hole in the component might, e.g., be necessary to handle the component or a further component attached to this component during the construction of a device, e.g., a wind turbine, and/or during servicing. An exemplary use of the prestressing device in a wind turbine 27 and more specifically in a support plate of a blade bearing will later be discussed with reference to the figures 3 and 4.

The prestressing device 1 comprises a sleeve 6 and a tensioning mechanism 9. The prestressing device 1 can be inserted along an insertion axis 10 into a hole 7 of the component 8 as shown by the arrow 22 in fig. 2. The insertion axis 10 can be the same as the longitudinal axis in axial direction of the prestressing device (1) and/or as a longitudinal axis of the hole 7. An initial diameter 11 of the outer surface 12 of the sleeve 6 is chosen to be approximately the same as the diameter 37 of the hole 7 or preferably a bit smaller to allow an insertion of the prestressing device 1 into the hole with little to no friction.

Once the position shown in fig. 2 is reached, the tensioning mechanism 9 of the prestressing device 1 is actuated, thereby increasing the diameter 11 of the outer surface 12 of the sleeve 6. As soon as the diameter 11 of the outer surface 12 reaches the diameter 37 of the hole 7, a further expansion of the diameter is only possible by slightly deforming the component 8 in the vicinity of the hole 7 by exerting a force 13 in the radial direction onto the surface 14 of the component 8 delimiting the hole 7 and therefore by prestressing the component 8.

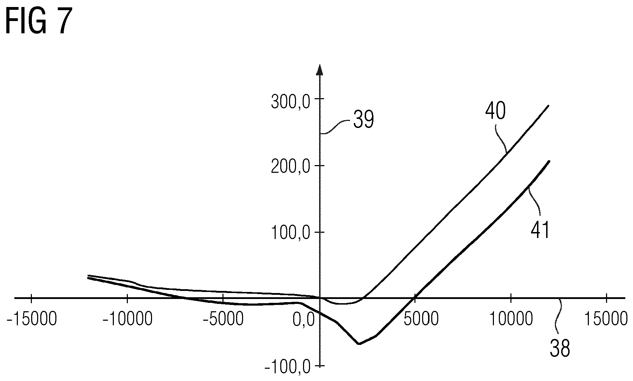

It was found in experiments and during simulations, that the peak stress in positions close to the hole can be notably reduced by using such a prestressing device. Exemplary results are shown in fig. 7, wherein the effect of a hole in a support plate of a blade bearing on the stress within such a component is simulated, wherein the x-axis 38 shows the bending moment of the blade in kNm and the y-axis 39 shows the equivalent stress in MPa close to the hole. The curve 40 shows the resulting stress when the hole is open and the curve 41 shows the stress once a prestressing device 1 is inserted in the hole and the tensioning mechanism 9 is adjusted. As shown in fig. 7, the stress in positions closed to the hole can be lowered by approximately 100 MPa for the problematic large positive bending moments on the blade. This reduction of internal stress can notably extend the lifetime of such a component.

Returning to figures 1 and 2, the advantageous tensioning mechanism 9 used in the example will now be discussed in detail. The tensioning mechanism 9 comprises two inset elements 4, 5 that are arranged partially in the interior space 15 of the sleeve 6. The diameter 19 of the inset elements 4, 5 and the diameter 20 of the interior space 15 both vary along the insertion axis 10. More specifically the outer surface 16 of the inset elements 4, 5 and the respective section of the inner surface 17 of the sleeve 6 forming the contact area 18 for contacting the outer surface 16 of the respective inset elements 4, 5 are formed as the shell of a truncated cone. Due to this shape, the sleeve 6 is widened in radial direction X when pushing the inset elements 4, 5 toward each other in radial direction as shown by the arrows 42, 43 in fig. 2. The chosen geometry also allows for a large contact area 18 between the respective inset element 4, 5 and the sleeve 6, therefore decreasing the force density in the contact area 18 when the prestressing device 1 is used to exert the force 13.

The tensioning mechanism 9 includes clamping means 21 that are used to exert a force in the axial direction pushing the inset elements 4, 5 towards each other. In the example the clamping means 21 are implemented by feeding a screw along the insertion axis 10 through openings 23, 24 of the inset elements 4, 5. The screw 2 engages the thread 25 of a counter component 3, that is formed as a nut in the example. In alternate embodiments different counter components 3 could be used or a thread formed by the inset element 5 could be used. The clamping force can therefore be exerted by tightening the screw 2, as indicated by the arrow 40 in fig. 2. To allow for a more even distribution of the clamping force, washers 44 are used in the example between the head of the screw 2 and the inset element 4 and between the nut and the inset element 5.

As discussed in detail in the general part of the description, it is advantageous to use the prestressing device 1 in a wind turbine. An example of such a wind turbine 27 is shown in fig. 3. The wind turbine 27 in the example is an offshore wind turbine anchored to the seafloor 33. The discussed features could however also be used in a land-based wind turbine or any other kind of wind turbine. In principle any component of the wind turbine, e.g., a metal tower 30, the nacelle 31 or the hub 28 could have a hole and it could be advantageous to use a previously discussed prestressing device 1 in this hole.

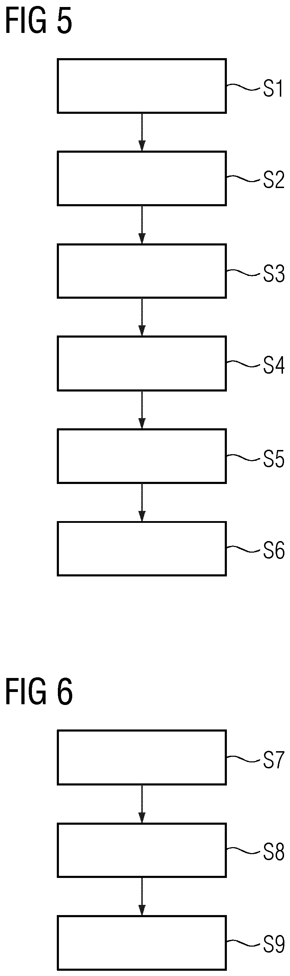

The following discussion will however focus on the use of the prestressing device 1 in the arrangement 26, namely in a bearing for connecting the blades 29 of the wind turbine 27 to the hub 28. The arrangement 26 and the surrounding parts of the hub 28 and the rotor blade 29 are schematically shown in fig. 4. The bearing 35 comprises an outer ring 45 attached to the hub 28 and an inner ring 46 attached to the rotor blade 29. The inner ring 46 is supported by bearing a support plate 47 that forms the component 8. For certain tasks, e.g., for servicing the wind turbine, it can be necessary to drill a hole 7 into the component 8, as will be later discussed later with reference to fig. 5. To avoid high peak stress levels in the area surrounding the hole 7 due to an ovalization of the hole 7, the prestressing device 1 can be inserted into the hole 7 as shown by the arrow 48 in fig. 4 and actuated to prestress the component 8. This was already discussed in detail above.

In the example the hole 36 in the component allows for an easy access to the prestressing device 1 from both sides once it is inserted in the hole 7. It is therefore possible, to securely hold the nut while turning the screw 2 or vice versa. Approaches for modifying the prestressing device 1 in such a way, that an actuation of the tensioning mechanism 9 would be possible from only one side, e.g., if the hole 36 would not be available, were already discussed in the general part of the description.

Fig. 5 shows a flowchart for a method for servicing a device, in the example for servicing a wind turbine. In step S1 a hole is drilled into the component 8, e.g., into the support plate 47 of a blade bearing. This hole 7 can, e.g., be required for certain tasks during servicing. An exemplary use of such a hole 7 will be discussed with reference to the steps S2 to S4, but these steps could also be replaced by different servicing steps using the hole.

In step S2 the hole is used to connect a hydraulic jack to the component 8. This hydraulic jack is then used in step S3 to move the component 8 and preferably a further component of the device connected to the component, in the example the wind turbine blade attached to the inner ring of the blade bearing. This can, e.g., be used to lower the blade for servicing purposes using the hydraulic jack.

In step S4 the hydraulic jack is disconnected, therefore leaving the hole 7 open.

In step S5 the prestressing device 1 is inserted into the hole 7 and in step S6 the tensioning mechanism 9 of the prestressing device 1 is actuated to deform the sleeve 6 and therefore prestress the component 8, as already discussed in detail with reference to the figures 1 and 2.

In some use cases the hole 7 might already be present and it might only be required to close the hole 7 in the component 8. In this case the steps S5 and S6 can be performed in isolation.

Fig. 6 shows a flowchart of a method for providing electrical energy to an electricity grid. This method will be discussed in conjunction fig. 3. In step S7 the generator 32 of the wind turbine 27 is used to generate electrical energy.

The wind turbine 27 is an offshore wind turbine and the electrical energy can be transmitted through a cable (not shown) from the offshore location of the wind turbine 27 to an electric receiver station 34 in step S8.

In step S9 the electrical energy is transmitted from the electric receiver station into an electricity grid (not shown).

Although the present invention has been described in detail with reference to the preferred embodiment, the present invention is not limited by the disclosed examples from which the skilled person is able to derive other variations without departing from the scope of the invention, e.g., the use of a thread 25 in the inset element 5 to hold the screw while the prestressing device 1 is used to prestress a section of a metal tower.

## Claims

1. A prestressing device (1) for prestressing a component (8) of a wind turbine (27) such, when being inserted into a hole (7) of the component (8), that a lifetime of the component (8) is increased,
wherein the prestressing device (1) comprises a sleeve (6) and a tensioning mechanism (9), and is designed to be inserted into the hole (7) along a longitudinal axis of the prestressing device (1), along a longitudinal axis of the hole (7) and/or along an insertion axis (10),
wherein the sleeve (6) is substantially made of metal, steel, hardened steel, technical ceramic, and/or ceramic matrix composite,
wherein the tensioning mechanism (9) is configured
to widen and/or deform the sleeve (6) when being actuated, such that a diameter (11) of an outer surface (12) of the sleeve (6) in a radial direction with respect to the insertion axis (10), to the longitudinal axis of the prestressing device (1) , and/or to the longitudinal axis of the hole (7), is increased from a first diameter to a second diameter in at least one axial section of the sleeve (6), and
thereby to, when the axial section of the sleeve (6) is arranged in the hole (7) and the diameter (37) of the hole (7) prior to the actuation of the tensioning mechanism (9) is lower than the second diameter, enable the outer surface (12) of the sleeve (6) to exert a prestressing force (13) in the radial direction onto an inner surface (14) of the hole (7) of the component (8) such that, when the component (8) is mechanically loaded by a force caused by an operation of the wind turbine (27) and applied upon the component (8), a deformation and/or an ovalization of the hole (7) is mitigated and/or suppressed, and/or material tensions within the surrounding of the hole (7) are reduced.

2. The prestressing device (1) according to claim 1, wherein the tensioning mechanism (9) comprises at least one inset element (4, 5) that is arranged at least partially in an interior space (15) of the sleeve (6),
wherein an outer surface (16) of the inset element (4, 5) is in direct or indirect contact with an inner surface (17) of the sleeve (6) in a respective contact area (18),
wherein the diameter (19) of the inset element (4, 5) in the radial direction increases continuously, and/or
wherein the diameter (20) of the interior space (15) in the radial direction decreases continuously along the axial direction and/or in direction of the insertion axis (10) in at least one respective direction from the respective contact area (18).

3. The prestressing device (1) according to claim 2, wherein at least a section of the inner surface (17) of the sleeve (6) and/or of the outer surface (16) of the inset element (4, 5) forming the respective contact area (18) is formed in a truncated-cone-like form.

4. The prestressing device (1) according to claim 2 or 3,
wherein the tensioning mechanism (9) comprises two of the inset elements (4, 5) arranged in the interior space (15) of the sleeve (6), wherein clamping means (21) of the tensioning mechanism (9) are designed to push the two inset elements (4, 5) toward each other in the axial direction to increase the diameter (11) of the outer surface (12) of the sleeve (6) when the clamping means (21) are actuated, and in particular
wherein the clamping means (21) is or comprise a screw (2) which extends along the insertion axis (10) through an opening (23) of a first one of the inset elements (4, 5) and into or through an opening (24) of a second one of the inset elements (4, 5), and which engages a thread (25) of a counter component (3), in particular a nut, or the second inset element (5).

5. The prestressing device (1) according to one of the preceding claims,
wherein inset element (4, 5) is/are substantially made of metal, steel, hardened steel, technical ceramic, and/or ceramic matrix composite, and/or
wherein sleeve (6) and the at least one inset element (4, 5) are formed from the same material.

6. The prestressing device (1) according to one of the preceding claims, wherein the sleeve (6) is formed as a hollow cylinder with a continuous outer surface (12) in the circumferential direction with respect to the insertion axis (10).

7. An arrangement comprising:
a component (8) of a wind turbine (27) having a hole (7) with an inner surface (14); and
a prestressing device (1) according to one of the preceding claims arranged in the hole (7) such that the outer surface (12) of the sleeve (6) of the prestressing device (1) exerts the normal force (13) onto the surface (14) of the component (8), thereby prestressing the component (8).

8. The arrangement according to claim 7, wherein the hole (7) is manufactured into the component (8) in the course of a service or maintenance task for the wind turbine (27) after an original manufacturing and assembling of the wind turbine (27).

9. A wind turbine (27) comprising a tower (30), a nacelle (31) being rotatable mounted to a top of the tower (30), a rotor having at a hub (28) and at least rotor blade (29), wherein the rotor is rotatable mounted to the nacelle (31), a generator (32) that can be rotated by the rotor, and at least one arrangement (26) according to claim 7 or 8.

10. The wind turbine (27) according to claim 9, wherein the component (8) is a support plate (8) for a bearing (35) of a rotor blade of (29) the wind turbine (27) arranged in a hub (28) of the wind turbine (27), and/or is a structural element of the generator (32), of the hub (28), of the nacelle (31), of a bed frame of the nacelle (31), and/or of the tower (30).

11. A method for operating the wind turbine (27) according to claim 9 or 10, in particular an offshore wind turbine, further in particular a floating offshore wind turbine, and/or for feeding electrical and/or chemical energy to an electricity and/or chemical grid, the method comprising the following steps:
initiating an operation of the wind turbine (27) according to claim 9 or 10; generating, by the wind turbine (27), electrical power and/or electrical energy, and in particular generating at least partially from the electrical energy, further in particular, by transforming electrical energy into hydrogen by electrolysis, chemical energy in form of a gas or liquid, in particular in the form of hydrogen, transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and supplying, at least partially, the electrical power, the electrical energy, and/or the chemical energy to an electrical and/or chemical utility grid, in particular to an onshore electrical and/or chemical utility grid and/or chemical/electrical storage.

12. A method for closing a hole (7) in a component (8) of a wind turbine (27) and/or for prestressing a component (8) of a wind turbine (27), comprising the steps of:
inserting the prestressing device (1) according to one of the claims 1 to 6 into the hole (7) along an insertion axis (10) of the prestressing device (1), and
actuating the tensioning mechanism (9) of the prestressing device (1) to widen and/or to deform the sleeve (6), thereby pushing the outer surface (12) of the sleeve (6) against the inner surface (14) of the component (8) delimiting the hole (7) to exert a force (13) in the radial direction onto the inner surface (14) of the component (8) delimiting the hole (7), in particular thereby prestressing the component (8).

13. The method for servicing a device, especially for servicing a wind turbine (27), that comprises a component (8), the method comprising the steps:
manufacturing, in particular drilling, at least one hole (7) into the component (8), wherein the hole (7) is manufactured into the component (8) in the course of a service or maintenance task for the wind turbine (27) after an original manufacturing and assembling of the wind turbine (27),
inserting the prestressing device (1) according to one of claims 1 to 6 into the hole (7) along the insertion axis (10) of the prestressing device (1), and
actuating the tensioning mechanism (9) of the prestressing device (1) to deform the sleeve (6),
thereby pushing the outer surface (12) of the sleeve (6) against the surface (14) of the component (8) delimiting the hole (7) to exert a force (13) in the radial direction onto the surface (14) of the component (8) delimiting the hole (7), and
thereby prestressing the component (8) such that, when the component (8) is mechanically loaded by a force caused by an operation of the wind turbine (27) and applied upon the component (8), a deformation and/or an ovalization of the hole (7) is mitigated and/or suppressed, and/or material tensions within the surrounding of the hole (7) are reduced such that a lifetime of the component (8) is increased.

14. The method according to claim 12 or 13, comprising the additional steps, performed prior to the insertion of the prestressing device (1) into the hole (7), of:
using the hole (7) to connect a hydraulic jack to the component (8),
actuating the hydraulic jack to move the component (8) and preferably at least one further component of the device,
disconnecting the hydraulic jack from the hole (7).

15. A method for servicing a wind turbine (27) according to claim 9 or 10, comprising the step of
checking on a compressing status the prestressing device (1) by reviewing a geometrical and/or arrangement situation of elements of the tensioning mechanism (9), and
in particular, reviewing a position of the screw (2) of the tensioning mechanism (9) according to claim 5.

## Patentansprüche

1. Vorspannvorrichtung (1) zum Vorspannen einer Komponente (8) einer Windturbine (27), sodass, wenn sie in ein Loch (7) der Komponente (8) eingeführt wird, eine Lebensdauer der Komponente (8) erhöht wird,
wobei die Vorspannvorrichtung (1) eine Hülse (6) und einen Spannmechanismus (9) umfasst und dazu ausgestaltet ist, entlang einer Längsachse der Vorspannvorrichtung (1), entlang einer Längsachse des Lochs (7) und/oder entlang einer Einführachse (10) in das Loch (7) eingeführt zu werden,
wobei die Hülse (6) im Wesentlichen aus Metall, Stahl, gehärtetem Stahl, technischer Keramik und/oder keramischem Faserverbundwerkstoff hergestellt ist,
wobei der Spannmechanismus (9) dazu konfiguriert ist,
die Hülse (6) aufzuweiten und/oder zu verformen, wenn er betätigt wird, sodass ein Durchmesser (11) einer Außenfläche (12) der Hülse (6) in einer radialen Richtung in Bezug auf die Einführachse (10), auf die Längsachse der Vorspannvorrichtung (1) und/oder auf die Längsachse des Lochs (7) von einem ersten Durchmesser auf einen zweiten Durchmesser in mindestens einem axialen Abschnitt der Hülse (6) erhöht wird, und
es dadurch, wenn der axiale Abschnitt der Hülse (6) in dem Loch (7) angeordnet ist und der Durchmesser (37) des Lochs (7) vor der Betätigung des Spannmechanismus (9) niedriger als der zweite Durchmesser ist, der Außenfläche (12) der Hülse (6) zu ermöglichen, eine Vorspannkraft (13) in der radialen Richtung auf eine Innenfläche (14) des Lochs (7) der Komponente (8) auszuüben, sodass, wenn die Komponente (8) durch eine Kraft, die durch einen Betrieb der Windturbine (27) verursacht wird und auf die Komponente (8) angewendet wird, mechanisch beansprucht wird, eine Verformung und/oder eine Ovalisierung des Lochs (7) gemindert und/oder unterdrückt wird und/oder Materialspannungen innerhalb der Umgebung des Lochs (7) reduziert werden.

2. Vorspannvorrichtung (1) nach Anspruch 1, wobei der Spannmechanismus (9) mindestens ein eingelassenes Element (4, 5) umfasst, das zumindest teilweise in einem Innenraum (15) der Hülse (6) angeordnet ist,
wobei eine Außenfläche (16) des eingelassenen Elements (4, 5) in direktem oder indirektem Kontakt mit einer Innenfläche (17) der Hülse (6) in einem jeweiligen Kontaktbereich (18) steht,
wobei der Durchmesser (19) des eingelassenen Elements (4, 5) in der radialen Richtung kontinuierlich zunimmt und/oder
wobei der Durchmesser (20) des Innenraums (15) in der radialen Richtung entlang der axialen Richtung und/oder in Richtung der Einführachse (10) in mindestens einer jeweiligen Richtung von dem jeweiligen Kontaktbereich (18) kontinuierlich abnimmt.

3. Vorspannvorrichtung (1) nach Anspruch 2, wobei mindestens ein Abschnitt der Innenfläche (17) der Hülse (6) und/oder der Außenfläche (16) des eingelassenen Elements (4, 5), das den jeweiligen Kontaktbereich (18) bildet, in einer kegelstumpfförmigen Form gebildet ist.

4. Vorspannvorrichtung (1) nach Anspruch 2 oder 3,
wobei der Spannmechanismus (9) zwei der eingelassenen Elemente (4, 5) umfasst, die in dem Innenraum (15) der Hülse (6) angeordnet sind, wobei Klemmmittel (21) des Spannmechanismus (9) dazu ausgestaltet sind, die zwei eingelassenen Elemente (4, 5) in der axialen Richtung aufeinander zu drücken, um den Durchmesser (11) der Außenfläche (12) der Hülse (6) zu erhöhen, wenn die Klemmmittel (21) betätigt werden, und insbesondere
wobei das Klemmmittel (21) eine Schraube (2) ist oder eine Schraube umfasst, die sich entlang der Einführachse (10) durch eine Öffnung (23) eines ersten der eingelassenen Elemente (4, 5) und in oder durch eine Öffnung (24) eines zweiten der eingelassenen Elemente (4, 5) erstreckt und die in ein Gewinde (25) einer Gegenkomponente (3), insbesondere einer Mutter, oder das zweite eingelassene Element (5) eingreift.

5. Vorspannvorrichtung (1) nach einem der vorhergehenden Ansprüche,
wobei das/die eingelassene(n) Element(e) (4, 5) im Wesentlichen aus Metall, Stahl, gehärtetem Stahl, technischer Keramik und/oder keramischem Faserverbundwerkstoff hergestellt ist/sind und/oder
wobei die Hülse (6) und das mindestens eine eingelassene Element (4, 5) aus demselben Material gebildet sind.

6. Vorspannvorrichtung (1) nach einem der vorhergehenden Ansprüche, wobei die Hülse (6) als ein Hohlzylinder mit einer durchgehenden Außenfläche (12) in der Umfangsrichtung in Bezug auf die Einführachse (10) gebildet ist.

7. Anordnung, umfassend:
eine Komponente (8) einer Windturbine (27), die ein Loch (7) mit einer Innenfläche (14) aufweist; und
eine Vorspannvorrichtung (1) nach einem der vorhergehenden Ansprüche, die derart in dem Loch (7) angeordnet ist, dass die Außenfläche (12) der Hülse (6) der Vorspannvorrichtung (1) die Normalkraft (13) auf die Oberfläche (14) der Komponente (8) ausübt, wodurch sie die Komponente (8) vorspannt.

8. Anordnung nach Anspruch 7, wobei das Loch (7) an der Komponente (8) im Verlauf von Wartungs- oder Instandhaltungsarbeiten an der Windturbine (27) nach einer ursprünglichen Herstellung und einem Zusammenbau der Windturbine (27) hergestellt wird.

9. Windturbine (27), umfassend einen Turm (30), eine Gondel (31), die drehbar an einer Oberseite des Turms (30) montiert ist, einen Rotor, der bei eine Nabe (28) und mindestens eine Rotorschaufel (29) aufweist, wobei der Rotor drehbar an der Gondel (31) montiert ist, einen Generator (32), der durch den Rotor gedreht werden kann, und mindestens eine Anordnung (26) nach Anspruch 7 oder 8.

10. Windturbine (27) nach Anspruch 9, wobei die Komponente (8) eine Stützplatte (8) für ein Lager (35) einer Rotorschaufel (29) der Windturbine (27) ist, die in einer Nabe (28) der Windturbine (27) angeordnet ist, und/oder ein Strukturelement des Generators (32), der Nabe (28), der Gondel (31), eines Trägerrahmens der Gondel (31) und/oder des Turms (30) ist.

11. Verfahren zum Betreiben der Windturbine (27) nach Anspruch 9 oder 10, insbesondere einer Offshore-Windturbine, ferner insbesondere einer schwimmenden Offshore-Windturbine, und/oder zum Zuführen von elektrischer und/oder chemischer Energie zu einem Stromnetz und/oder chemischen Netz, wobei das Verfahren die folgenden Schritte umfasst:
Einleiten eines Betriebs der Windturbine (27) nach Anspruch 9 oder 10; Erzeugen, durch die Windturbine (27), von elektrischer Leistung und/oder elektrischer Energie und insbesondere Erzeugen, zumindest teilweise aus der elektrischen Energie, ferner insbesondere durch Umwandeln elektrischer Energie in Wasserstoff durch Elektrolyse, chemischer Energie in Form eines Gases oder einer Flüssigkeit, insbesondere in der Form von Wasserstoff, Übertragen, zumindest teilweise, der elektrischen Leistung, der elektrischen Energie und/oder der chemischen Energie an eine Energieempfangsanordnung, insbesondere wobei die Empfangsanordnung nicht in internationalen Gewässern positioniert ist, an Land positioniert ist und/oder innerhalb einer 12-Meilen-Zone eines jeweiligen souveränen Nationalstaats, über die der jeweilige Staat die Rechtshoheit innehat, positioniert ist, und Zuführen, zumindest teilweise, der elektrischen Leistung, der elektrischen Energie und/oder der chemischen Energie zu einem elektrischen und/oder chemischen Versorgungsnetz, insbesondere zu einem elektrischen und/oder chemischen Versorgungsnetz an Land und/oder einem chemischen/elektrischen Speicher.

12. Verfahren zum Schließen eines Lochs (7) in einer Komponente (8) einer Windturbine (27) und/oder zum Vorspannen einer Komponente (8) einer Windturbine (27), umfassend die folgenden Schritte:
Einführen der Vorspannvorrichtung (1) nach einem der Ansprüche 1 bis 6 in das Loch (7) entlang einer Einführachse (10) der Vorspannvorrichtung (1) und
Betätigen des Spannmechanismus (9) der Vorspannvorrichtung (1), um die Hülse (6) aufzuweiten und/oder zu verformen, wodurch die Außenfläche (12) der Hülse (6) gegen die Innenfläche (14) der Komponente (8), die das Loch (7) begrenzt, gedrückt wird, um eine Kraft (13) in der radialen Richtung auf die Innenfläche (14) der Komponente (8), die das Loch (7) begrenzt, auszuüben, insbesondere wodurch die Komponente (8) vorgespannt wird.

13. Verfahren zum Warten einer Vorrichtung, insbesondere zum Warten einer Windturbine (27), die eine Komponente (8) umfasst, wobei das Verfahren die folgenden Schritte umfasst:
Herstellen, insbesondere Bohren, mindestens eines Lochs (7) an der Komponente (8), wobei das Loch (7) an der Komponente (8) im Verlauf von Wartungs- oder Instandhaltungsarbeiten an der Windturbine (27) nach einer ursprünglichen Herstellung und einem Zusammenbau der Windturbine (27) hergestellt wird,
Einführen der Vorspannvorrichtung (1) nach einem der Ansprüche 1 bis 6 in das Loch (7) entlang der Einführachse (10) der Vorspannvorrichtung (1) und Betätigen des Spannmechanismus (9) der Vorspannvorrichtung (1), um die Hülse (6) zu verformen,
dadurch Drücken der Außenfläche (12) der Hülse (6) gegen die Oberfläche (14) der Komponente (8), die das Loch (7) begrenzt, um eine Kraft (13) in der radialen Richtung auf die Oberfläche (14) der Komponente (8), die das Loch (7) begrenzt, auszuüben, und
dadurch Vorspannen der Komponente (8) derart, dass, wenn die Komponente (8) durch eine Kraft, die durch einen Betrieb der Windturbine (27) verursacht wird und auf die Komponente (8) angewendet wird, mechanisch beansprucht wird, eine Verformung und/oder eine Ovalisierung des Lochs (7) gemindert und/oder unterdrückt wird und/oder Materialspannungen innerhalb der Umgebung des Lochs (7) reduziert werden, sodass eine Lebensdauer der Komponente (8) erhöht wird.

14. Verfahren nach Anspruch 12 oder 13, umfassend die folgenden zusätzlichen Schritte, die vor dem Einführen der Vorspannvorrichtung (1) in das Loch (7) durchgeführt werden:
Verwenden des Lochs (7), um einen Hydraulikheber mit der Komponente (8) zu verbinden,
Betätigen des Hydraulikhebers, um die Komponente (8) und bevorzugt mindestens eine weitere Komponente der Vorrichtung zu bewegen,
Trennen des Hydraulikhebers von dem Loch (7).

15. Verfahren zum Warten einer Windturbine (27) nach Anspruch 9 oder 10, umfassend den Schritt von
Überprüfen der Vorspannvorrichtung (1) auf einen Kompressionszustand durch Begutachten einer geometrischen und/oder Anordnungssituation von Elementen des Spannmechanismus (9) und
insbesondere Begutachten einer Position der Schraube (2) des Spannmechanismus (9) nach Anspruch 5.

## Revendications

1. Dispositif de précontrainte (1) pour précontraindre un composant (8) d'une éolienne (27) de telle sorte que, lorsqu'il est inséré dans un trou (7) du composant (8), une durée de vie du composant (8) soit augmentée,
dans lequel le dispositif de précontrainte (1) comprend un manchon (6) et un mécanisme de mise en tension (9), et est conçu pour être inséré dans le trou (7) le long d'un axe longitudinal du dispositif de précontrainte (1), le long d'un axe longitudinal du trou (7) et/ou le long d'un axe d'insertion (10),
dans lequel le manchon (6) est sensiblement constitué de métal, d'acier, d'acier trempé, de céramique technique et/ou de composite à matrice céramique,
dans lequel le mécanisme de mise en tension (9) est configuré
pour élargir et/ou déformer le manchon (6) lorsqu'il est actionné, de telle sorte qu'un diamètre (11) d'une surface externe (12) du manchon (6) dans une direction radiale par rapport à l'axe d'insertion (10), à l'axe longitudinal du dispositif de précontrainte (1) et/ou à l'axe longitudinal du trou (7), soit augmenté d'un premier diamètre à un second diamètre dans au moins une section axiale du manchon (6), et
de manière à, lorsque la section axiale du manchon (6) est agencée dans le trou (7) et que le diamètre (37) du trou (7) avant l'actionnement du mécanisme de mise en tension (9) est inférieur au second diamètre, permettre à la surface externe (12) du manchon (6) d'exercer une force de précontrainte (13) dans la direction radiale sur une surface interne (14) du trou (7) du composant (8) de telle sorte que, lorsque le composant (8) est chargé mécaniquement par une force provoquée par un fonctionnement de l'éolienne (27) et appliquée sur le composant (8), une déformation et/ou une ovalisation du trou (7) soit atténuée et/ou supprimée, et/ou que des tensions de matériau au voisinage du trou (7) soient réduites.

2. Dispositif de précontrainte (1) selon la revendication 1, dans lequel le mécanisme de mise en tension (9) comprend au moins un élément d'insertion (4, 5) qui est agencé au moins partiellement dans un espace intérieur (15) du manchon (6),
dans lequel une surface externe (16) de l'élément d'insertion (4, 5) est en contact direct ou indirect avec une surface interne (17) du manchon (6) dans une zone de contact (18) respective,
dans lequel le diamètre (19) de l'élément d'insertion (4, 5) dans la direction radiale augmente de manière continue, et/ou
dans lequel le diamètre (20) de l'espace intérieur (15) dans la direction radiale diminue de manière continue le long de la direction axiale et/ou en direction de l'axe d'insertion (10) dans au moins une direction respective à partir de la zone de contact (18) respective.

3. Dispositif de précontrainte (1) selon la revendication 2, dans lequel au moins une section de la surface interne (17) du manchon (6) et/ou de la surface externe (16) de l'élément d'insertion (4, 5) formant la zone de contact (18) respective est réalisée sous une forme de cône tronqué.

4. Dispositif de précontrainte (1) selon la revendication 2 ou 3,
dans lequel le mécanisme de mise en tension (9) comprend deux des éléments d'insertion (4, 5) agencés dans l'espace intérieur (15) du manchon (6), dans lequel des moyens de serrage (21) du mécanisme de mise en tension (9) sont conçus pour pousser les deux éléments d'insertion (4, 5) l'un vers l'autre dans la direction axiale afin d'augmenter le diamètre (11) de la surface externe (12) du manchon (6) lorsque les moyens de serrage (21) sont actionnés, et en particulier
dans lequel le moyen de serrage (21) est ou comprend une vis (2) qui s'étend le long de l'axe d'insertion (10) à travers une ouverture (23) d'un premier des éléments d'insertion (4, 5) et dans ou à travers une ouverture (24) d'un second des éléments d'insertion (4, 5), et qui vient en prise avec un filetage (25) d'un contre-composant (3), en particulier un écrou, ou du second élément d'insertion (5).

5. Dispositif de précontrainte (1) selon l'une des revendications précédentes,
dans lequel l'élément d'insertion (4, 5) est sensiblement constitué de métal, d'acier, d'acier trempé, de céramique technique et/ou de composite à matrice céramique, et/ou dans lequel le manchon (6) et l'au moins un élément d'insertion (4, 5) sont formés du même matériau.

6. Dispositif de précontrainte (1) selon l'une des revendications précédentes, dans lequel le manchon (6) est réalisé sous la forme d'un cylindre creux avec une surface externe (12) continue dans la direction circonférentielle par rapport à l'axe d'insertion (10).

7. Agencement comprenant :
un composant (8) d'une éolienne (27) présentant un trou (7) doté d'une surface interne (14) ; et
un dispositif de précontrainte (1) selon l'une des revendications précédentes, agencé dans le trou (7) de telle sorte que la surface externe (12) du manchon (6) du dispositif de précontrainte (1) exerce la force normale (13) sur la surface (14) du composant (8), de manière à précontraindre ainsi le composant (8).

8. Agencement selon la revendication 7, dans lequel le trou (7) est réalisé dans le composant (8) au cours d'une tâche d'entretien ou de maintenance pour l'éolienne (27) après une fabrication et un assemblage initiaux de l'éolienne (27).

9. Éolienne (27) comprenant une tour (30), une nacelle (31) montée rotative sur un sommet de la tour (30), un rotor comportant un moyeu (28) et au moins une pale de rotor (29), dans laquelle le rotor est monté rotatif sur la nacelle (31), une génératrice (32) qui peut être entraînée en rotation par le rotor, et au moins un agencement (26) selon la revendication 7 ou 8.

10. Éolienne (27) selon la revendication 9, dans laquelle le composant (8) est une plaque de support (8) pour un roulement (35) d'une pale de rotor (29) de l'éolienne (27) agencée dans un moyeu (28) de l'éolienne (27), et/ou est un élément structurel de la génératrice (32), du moyeu (28), de la nacelle (31), d'un châssis de la nacelle (31) et/ou de la tour (30).

11. Procédé de fonctionnement de l'éolienne (27) selon la revendication 9 ou 10, en particulier d'une éolienne en mer, plus particulièrement d'une éolienne en mer flottante, et/ou pour l'alimentation en énergie électrique et/ou chimique d'un réseau électrique et/ou chimique, le procédé comprenant les étapes suivantes :
le lancement d'un fonctionnement de l'éolienne (27) selon la revendication 9 ou 10 ; la génération, par l'éolienne (27), d'une puissance électrique et/ou d'une énergie électrique, et en particulier la génération au moins partiellement à partir de l'énergie électrique, plus particulièrement par transformation d'énergie électrique en hydrogène par électrolyse, d'une énergie chimique sous la forme d'un gaz ou d'un liquide, en particulier sous la forme d'hydrogène ; la transmission, au moins partielle, de la puissance électrique, de l'énergie électrique et/ou de l'énergie chimique à un agencement de réception d'énergie, en particulier dans lequel l'agencement de réception n'est pas positionné dans les eaux internationales, est positionné à terre et/ou est positionné dans une zone des 12 milles d'un État national souverain respectif sur laquelle ledit État respectif a juridiction ; et la fourniture, au moins partielle, de la puissance électrique, de l'énergie électrique et/ou de l'énergie chimique à un réseau de distribution électrique et/ou chimique, en particulier à un réseau de distribution électrique et/ou chimique à terre et/ou à un stockage chimique/électrique.

12. Procédé de fermeture d'un trou (7) dans un composant (8) d'une éolienne (27) et/ou de précontrainte d'un composant (8) d'une éolienne (27), comprenant les étapes suivantes :
l'insertion du dispositif de précontrainte (1) selon l'une des revendications 1 à 6 dans le trou (7) le long d'un axe d'insertion (10) du dispositif de précontrainte (1), et
l'actionnement du mécanisme de mise en tension (9) du dispositif de précontrainte (1) pour élargir et/ou déformer le manchon (6), de manière à pousser la surface externe (12) du manchon (6) contre la surface interne (14) du composant (8) délimitant le trou (7) afin d'exercer une force (13) dans la direction radiale sur la surface interne (14) du composant (8) délimitant le trou (7), en particulier de manière à précontraindre ainsi le composant (8).

13. Procédé d'entretien d'un dispositif, en particulier d'entretien d'une éolienne (27), qui comprend un composant (8), le procédé comprenant les étapes suivantes :
la réalisation, en particulier le forage, d'au moins un trou (7) dans le composant (8), dans lequel le trou (7) est réalisé dans le composant (8) au cours d'une tâche d'entretien ou de maintenance pour l'éolienne (27) après une fabrication et un assemblage initiaux de l'éolienne (27),
l'insertion du dispositif de précontrainte (1) selon l'une des revendications 1 à 6 dans le trou (7) le long de l'axe d'insertion (10) du dispositif de précontrainte (1), et l'actionnement du mécanisme de mise en tension (9) du dispositif de précontrainte (1) pour déformer le manchon (6),
de manière à pousser la surface externe (12) du manchon (6) contre la surface (14) du composant (8) délimitant le trou (7) afin d'exercer une force (13) dans la direction radiale sur la surface (14) du composant (8) délimitant le trou (7), et
de manière à précontraindre ainsi le composant (8) de telle sorte que, lorsque le composant (8) est chargé mécaniquement par une force provoquée par un fonctionnement de l'éolienne (27) et appliquée sur le composant (8), une déformation et/ou une ovalisation du trou (7) soit atténuée et/ou supprimée, et/ou que des tensions de matériau au voisinage du trou (7) soient réduites de telle sorte qu'une durée de vie du composant (8) soit augmentée.

14. Procédé selon la revendication 12 ou 13, comprenant les étapes supplémentaires suivantes, exécutées avant l'insertion du dispositif de précontrainte (1) dans le trou (7) :
l'utilisation du trou (7) pour raccorder un vérin hydraulique au composant (8),
l'actionnement du vérin hydraulique pour déplacer le composant (8) et de préférence au moins un autre composant du dispositif,
le débranchement du vérin hydraulique du trou (7).

15. Procédé d'entretien d'une éolienne (27) selon la revendication 9 ou 10, comprenant l'étape de
contrôle d'un état de compression du dispositif de précontrainte (1) par l'examen d'une situation géométrique et/ou d'agencement d'éléments du mécanisme de mise en tension (9), et
en particulier, l'examen d'une position de la vis (2) du mécanisme de mise en tension (9) selon la revendication 5.
